# EUROPÄISCHE PATENTSCHRIFT

(11) **EP 2 646 362 B1**
(45) Veröffentlichungstag und Bekanntmachung des Hinweises auf die Patenterteilung: **21.01.2015**
(21) Anmeldenummer: 11790956.4
(22) Anmeldetag: 29.11.2011
(51) Int. Cl.: B66B 11/02

(54) **AUFZUGSKABINE**
ELEVATOR CAR
CABINE D'ASCENSEUR

(30) Priorität: 29.11.2010 WO PCT/CN2010/001910
(43) Veröffentlichungstag der Anmeldung: 09.10.2013
(73) Patentinhaber: Inventio AG, 6052 Hergiswil (CH)
(72) Erfinder: ZHANG, Ying Jin, Shanghai 200011 (CN)
(74) Vertreter: Hirschberger, Petra
(86) Internationale Anmeldenummer: PCT/EP2011/071293
(87) Internationale Veröffentlichungsnummer: WO 2012/072636

(56) Entgegenhaltungen:
- EP-A1- 1 882 669
- WO-A1-2006/136643
- JP-A- 2008 120 470
- US-A- 1 687 087
- US-A- 2 133 621

## Beschreibung

Die Erfindung betrifft eine Aufzugskabine mit einen Innenraum für Passagiere und/oder Güter bildenden Kabinenwänden und einer Kabinendecke und einem Kabinenboden, wobei die Kabinenwände und/oder die Kabinendecke aus Paneelen bestehen, die mittels Verbindungselementen festhaltbar sind.

Aus der Patentschrift US 1 718 014 ist eine Aufzugskabine bekannt geworden, deren Wände einen Passagierraum oder einen Frachtraum bilden. Die Wände bestehen aus rechteckförmigen Paneelen. Jedes Paneel ist mindestens entlang der beiden Längsseiten umgebogen, wobei der um etwa 90° umgebogene Paneelteil entlang seines Randes um weitere 90° umgebogen ist. Der umgebogene Paneelteil stösst an den umgebogenen Paneelteil des benachbarten Paneels, wobei über die umgebogenen Ränder entlang der Paneel-Längsseite ein Klammerprofil schiebbar ist, das die beiden benachbarten Paneele an den umgebogenen Rändern lösbar verbindet. Die für den Benutzer der Aufzugskabine sichtbare Kabinenwand besteht somit aus einer geschlossenen Fläche mit lediglich feinen Anschlussfugen zwischen den Paneelen. Nachteilig bei dieser Art der Paneelverbindung ist die schwierige Montage der Klammerprofile weil die Paneele über die gesamte Kabinenhöhe reichen und dementsprechend die Klammerprofile über die gesamte Kabinenhöhe über die umgebogenen Kanten der umgebogenen Paneelteile geschoben werden müssen, wobei sich die Reibkraft und somit die Kraft zum Aufschieben bedingt durch den Klammereffekt laufend zunimmt. Die Klammerverbindung ist auch beim Ersetzen eines Paneels nachteilig, weil für ein Paneel zwei Klammerprofile entfernt und wieder eingesetzt werden müssen Aus der Patentschrift JP2008120470 ist eine andere Aufzugskabine gemäß dem Stand der Technik bekannt geworden.

Die Erfindung, wie sie in Anspruch 1 gekennzeichnet ist, löst die Aufgabe, die Nachteile der bekannten Einrichtung zu vermeiden und Kabinenwände und/oder eine Kabinendecke mit Paneelen für eine Aufzugskabine zu schaffen, die leicht anbringbar und einfach austauschbar sind.

Vorteilhafte Weiterbildungen der Erfindung sind in den abhängigen Patentansprüchen angegeben.

Die durch die verschiedenen Ausführungsbeispiele erreichten Vorteile sind im Wesentlichen darin zu sehen, dass die die Kabinenwände oder Kabinendecke bildenden Paneele vom Innenraum der Aufzugskabine her montierbar und austauschbar sind. Dadurch, dass die zweiten Verbindungselementen am Kabinentragrahmen fixiert sind, lassen sich die Paneele einfach vom Innenraum her an die Kabine anbringen und bei Bedarf von derselben Seite wieder entfernen bzw. demontieren. Die beispielsweise durch Schweiss-, Schraub- oder andere Verbindungen am Kabinentragrahmen fixierten zweiten Verbindungselemente bleiben bei der Montage und Demontage mit der Kabine verbunden.

Mit dem Kabinentragrahmen verbundene Profile können den Paneelen als Träger dienen, wobei die Ränder der Paneele an den beispielsweise omega-förmigen Trägerprofilen steckbar sind. Die Wände und/oder die Decke der Aufzugskabine sind in kurzer Zeit montierbar und auch einzelne Paneele leicht ersetzbar oder austauschbar. Mit der vorteilhaften Montage kann beispielsweise die optische Aufmachung der Wände und/oder der Decke ohne grossen Aufwand verändert werden. Beispielsweise die Farbgestaltung oder die Bebilderung der Wände und/oder der Decke können in kurzer Zeit verändert werden.

Anhand der beiliegenden Figuren werden verschiedene Ausführungsbeispiele der vorliegenden Erfindung näher erläutert.

Es zeigen:
- Fig. 1: einen Aufzug mit einer Aufzugskabine und einem Gegengewicht,
- Fig. 1a: ein Ausführungsbeispiel von eine Kabinenwand oder eine Kabinendecke bildenden Paneelen,
- Fig. 2: einen Schnitt entlang der Linie A-A der Fig. 1a,
- Fig. 3: einen Ausschnitt B der Fig. 2 mit Einzelheiten einer Steckverbindung zwischen Tragprofilen und Paneelen,
- Fig. 4: die Eigenschaften eines Tragprofils,
- Fig. 5: Einzelheiten eines Paneels,
- Fig. 5a: einen Schnitt durch zwei benachbarte Paneelecken,
- Fig. 6 und Fig. 7: in die Kabinenwände oder in die Kabinendecke einbaubare Kabinenausrüstung.

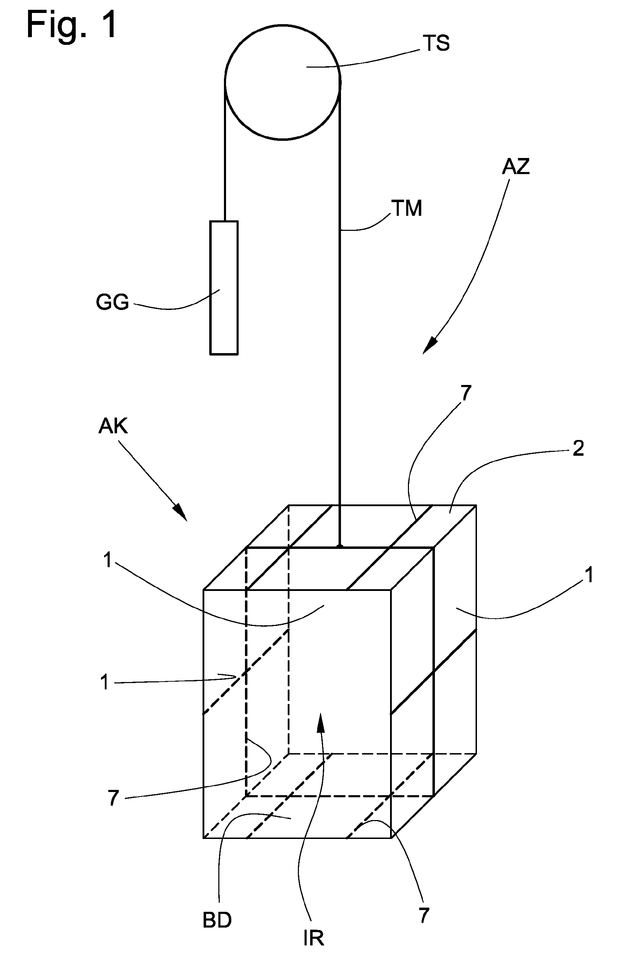

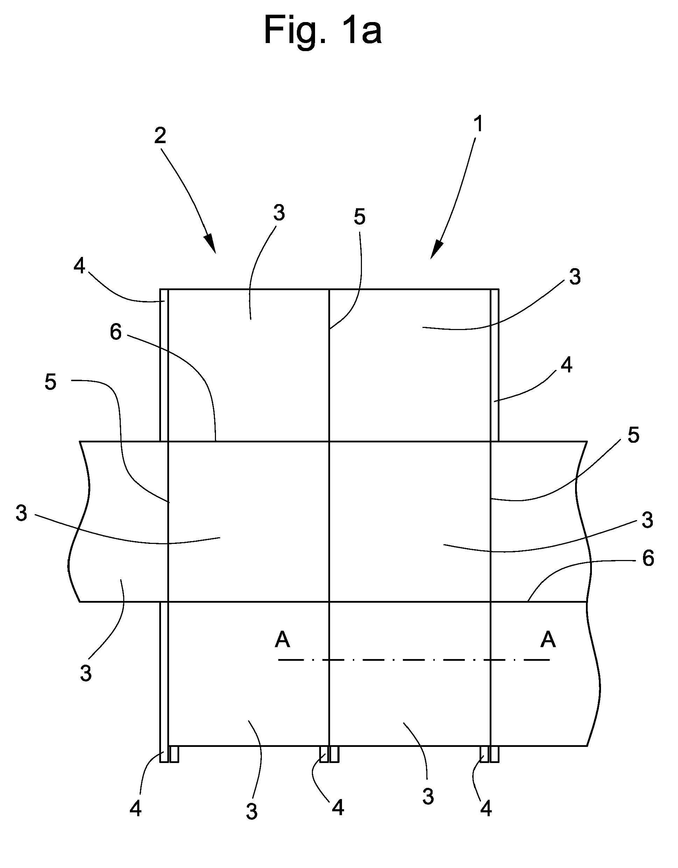

Fig. 1 zeigt einen Aufzug AZ mit einer Aufzugskabine AK und einem Gegengewicht GG. Ein Tragmittel TM verbindet die Aufzugskabine AK und das Gegengewicht GG und ist über eine Treibscheibe TS geführt, die das Tragmittel TM antreibt. Die Aufzugskabine AK besteht im Wesentlichen aus einem Kabinentragrahmen 7, der mit dem Tragmittel TM verbunden ist und einen Boden BD, Wände 1 und eine Decke 2 trägt. Weitere Komponenten der Aufzugskabine, beispielsweise die Kabinentüren, sind nicht gezeigt.

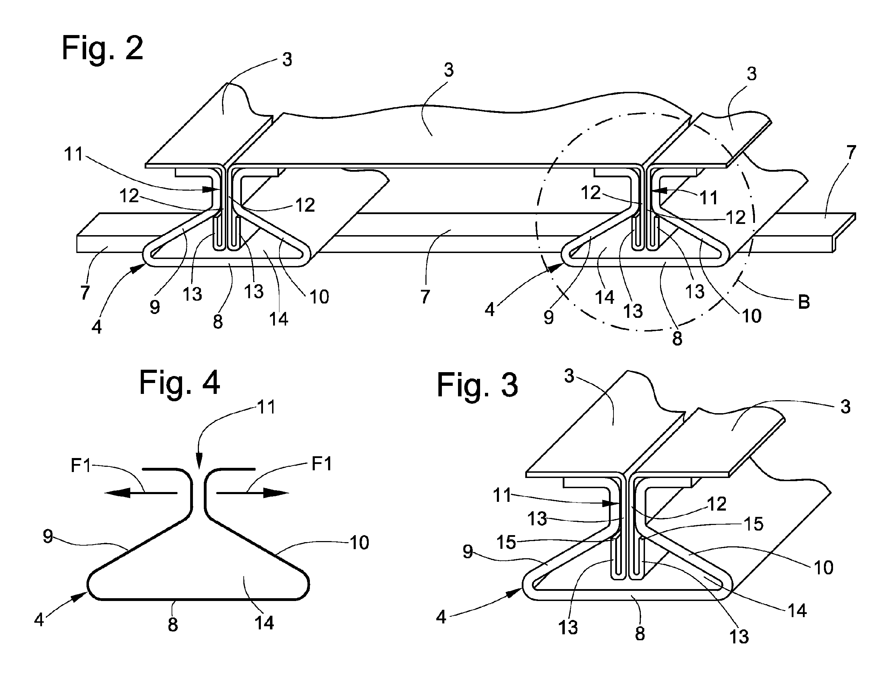

Fig. 1a zeigt ein Ausführungsbeispiel von eine Kabinenwand 1 oder eine Kabinendecke 2 bildenden Paneelen 3. Jedes Paneel 3 ist mit mindestens zwei ersten, in Fig. 2 gezeigten Verbindungselementen 12,13 an mindestens zwei zweiten Verbindungselementen 4 steckbar angeordnet, wobei die zweiten Verbindungselemente 4, die Teil einer Steckverbindung sind, am Kabinentragrahmen 7 angeordnet sind. Der Kabinentragrahmen 7 ist an Führungsschienen geführt und wie oben erwähnt mit dem Tragmittel TM verbunden, das mittels der Treibscheibe TS eines Aufzugantriebs bewegbar ist.

Fig. 1a zeigt mehrere Paneele 3, die an Tragprofilen 4 angeordnet sind, dabei ist jedes Paneel 3 an zwei parallel laufenden Tragprofilen 4 steckbar angeordnet. Zwischen zwei benachbarten Paneelen 3 wird durch die Steckverbindung eine feine, erste Anschlussfuge 5 gebildet. An den Paneelseiten ohne Steckverbindung stossen die Paneele 3 lose aufeinander und bilden eine feine, zweite Anschlussfuge 6. Entlang Wandrändern oder Deckenrändern sind die zweiten Verbindungselemente 4, im Weiteren Tragprofile 4 genannt, lediglich von einer Seite her mit Steckverbindungen belegt, die übrigen Tragprofile 4 sind von zwei Seiten her mit Steckverbindungen belegt.

Als Ausführungsvariante einer Kabinenwand oder einer Kabinendecke können zusätzliche, quer zu den gezeigten Tragprofilen 4 verlaufende Tragprofile vorgesehen sein. Die Paneele sind bei dieser Variante beispielsweise an vier Seiten steckbar.

Grösse und/oder Form und/oder Oberfläche der Paneele 3 können unterschiedlich sein. Quadratische, wie in Fig. 1a gezeigt, oder rechteckige oder andere Formen oder mehrere Formen gemischt sind möglich. Die in Fig. 1a gezeigten Tragprofile 4 können beispielsweise auch wellenförmig, gekrümmt oder zickzackförmig sein.

Fig. 2 zeigt einen Schnitt entlang der Linie A-A der Fig. 1a durch die beispielsweise etwa omegaförmigen Tragprofile 4 und durch die Paneele 3. Die Tragprofile 4 sind am schematisch dargestellten Kabinentragrahmen 7 oder an mit dem Kabinentragrahmen 7 verbundenen Teilen angeordnet. Jedes Tragprofil 4 weist einen Fuss 8, einen ersten Schenkel 9 und einen zweiten Schenkel 10 auf. Der Fuss 8 ist mit dem Kabinentragrahmen 7 verbunden, die Schenkel 9,10 laufen an ihren freien Enden zusammen und bilden eine schlitzförmige Verengung 11, durch die die Ränder zweier Paneele 4 steckbar sind. Die Schenkel 9,10 weisen Federeigenschaften auf und können mittels einer in Fig. 4 gezeigten Kraft F1 beim Einstecken der Paneelränder an der Verengung 11 auseinander bewegt werden.

Anstatt der gezeigten etwa omega-förmigen Tragprofile 4 können beispielsweise im Querschnitt etwa kreisförmige oder dreieckförmige mit einer Verengung 11 versehene Tragprofile 4 verwendet werden. Unabhängig von einer konkreten Form eines Tragprofils lässt es sich an einer Verengung auseinander bewegen wenn ein Paneel 3 eingesteckt wird. Die Form ist zudem so gewählt, dass ein sicherer Halt eines Paneels 3 gewährleistet ist.

Jedes Paneel ist im gezeigten Ausführungsbeispiel an den Rändern entlang mindestens zweier parallelen Seiten zu ersten Verbindungselementen 12,13 umgebogen, wobei ein um etwa 90° umgebogener erster Paneelteil 12 um weitere 180° zu einem zweiten Paneelteil 13 umgebogen ist. Der umgebogene erste Paneelteil 12 stösst an den umgebogenen ersten Paneelteil 12 des benachbarten Paneels 3. Der umgebogene zweite Paneelteil 13 des Paneels 3 wird zusammen mit dem umgebogenen zweiten Paneelteil 13 des benachbarten Paneels 3 durch die Verengung 11 gesteckt. Dabei werden die in Fig. 4 gezeigten Kräfte F1 erzeugt und die freien Schenkel 9,10 auseinander bewegt. Nach dem vollständigen Einstecken der zweiten Paneelteile 13 bewegen sich die Schenkel an der Verengung 11 durch ihre Federeigenschaften in entgegengesetzter Richtung und halten die ersten Paneelteile 12 fest zusammen.

Die Paneelteile 12,13 der Paneele 3 können auch anstatt umgebogen beispielsweise am Paneel 3 angeschweisst oder angeklebt werden. Es versteht sich zudem, dass das erste Paneelteil 12 und das zweite Paneelteil 13 durch ein einziges, die Funktion der Paneelteile 12,13 erfüllendes Paneelteil ersetzt werden kann. Dieses Paneelteil kann beispielsweise tropfenförmig oder keilförmig, etc. sein.

Wie in Fig. 3 gezeigt befinden sich die zweiten Paneelteile 13 in der eingesteckten Lage in einem Hohlraum 14 des Tragprofils 4, wobei ein Ende 15 des zweiten Paneelteils 13 an einem der Schenkel 9,10 ansteht ohne zu verhaken und das Paneel 3 in einer durch die Paneele 3 gebildeten Wand- oder Deckenfläche etwa senkrecht stehenden Ebene festhält.

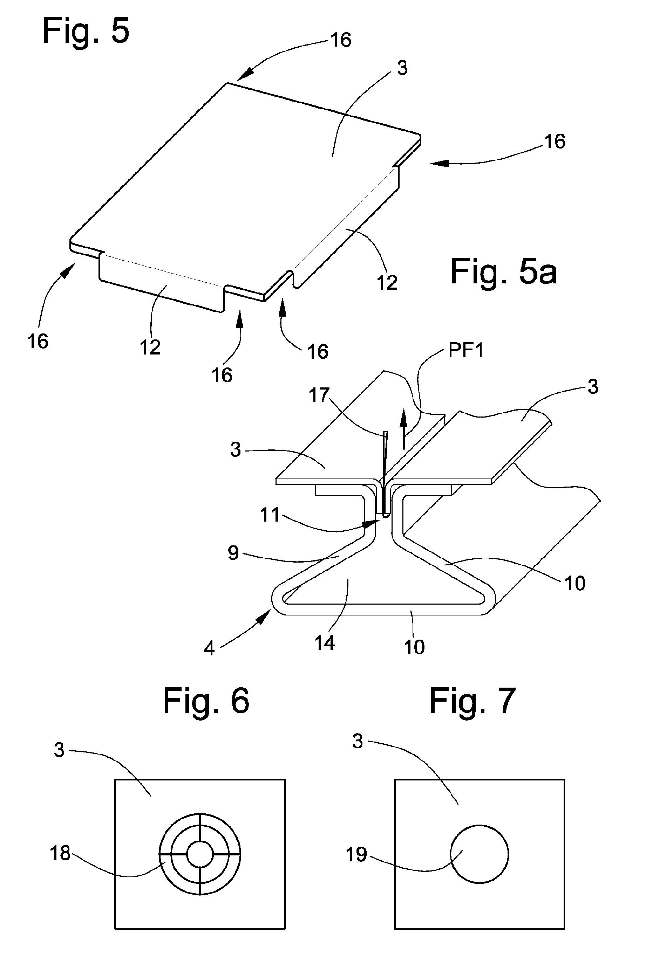

Fig. 5 zeigt Einzelheiten eines Ausführungsbeispiels eines Paneels 3. An den Paneelecken weisen die umgebogenen Paneelteile 12,13 Rücksprünge 16 auf. Bei einem solchen Rücksprung 16 ist das erste Paneelteil 12 lediglich stummelartig ausgebildet, das zweite Paneelteil 13 fehlt vollständig.

Fig. 5a zeigt einen Schnitt durch zwei benachbarte Paneelecken, die gemäss Fig. 5 Rücksprünge 16 aufweisen. Zwischen die stummelartigen, ersten Paneelteile 12 ist ein Werkzeug 17, beispielsweise ein Haken schiebbar und am Paneelstummel einhängbar. Mit diesem Werkzeug 17 ist ein Paneel 3 zerstörungsfrei entfernbar, ersetzbar oder austauschbar, indem das Werkzeug 17 in der Pfeilrichtung PF1 bewegt wird. Dabei verlassen die Paneelteile 12,13 das Tragprofil 4 zerstörungsfrei.

Möglich sind auch Paneele 3 ohne Rücksprünge 16 an den Ecken. Es versteht sich, dass die in den Figuren 1a, 2 und 3 gezeigten Paneele 3 mit oder ohne Rücksprünge 16 ausgestaltet werden können. Sind keine Rücksprünge 16 vorhanden, sind beispielsweise in einem Fall an den Paneelecken kleine Löcher vorgesehen, durch die das oben genannte Werkzeug 17 einführbar ist. Im anderen Fall werden beispielsweise auf dem Vakuumprinzip oder auf dem Magnetprinzip arbeitende und an der Paneeloberfläche haftende Werkzeuge 17 verwendet.

Fig. 6 und Fig. 7 zeigen in die Kabinenwände oder in die Kabinendecke einbaubare, beispielhafte Kabinenausrüstung. Einzelne Paneele 3 können beispielsweise mit einem Lüftungsgitter 18 oder mit einer Beleuchtungseinrichtung 19 versehen werden.

Als Ausführungsvariante können die Paneele mit anderen, beispielsweise auf dem Druckknopfprinzip oder auf dem Klettenprinzip oder auf dem Magnetprinzip arbeitenden Verbindungsmitteln steckbar sein.

## Patentansprüche

1. Aufzugskabine (AK) mit einem Kabinentragrahmen (7) und einen Innenraum (IR) für Passagiere und/oder Güter bildenden Kabinenwänden (1) und einer Kabinendecke (2) und einem Kabinenboden (BD), wobei die Kabinenwände (1) und/oder die Kabinendecke (2) aus Paneelen (3) bestehen, die mittels Verbindungselementen (4,12,13) festhaltbar sind und die Paneele (3) vom Innenraum (IR) her mittels ersten Verbindungselementen (12,13) und mittels zweiten Verbindungselementen (4) anbringbar sind, wobei die zweiten Verbindungselemente (4) am Kabinentragrahmen (7) fixiert sind, Teil von Tragprofilen (4) sind, die zusammen mit den ersten Verbindungselementen (12,13) die Paneele (3) festhalten und wobei die ersten Verbindungselemente (12,13) Paneelteile (12,13) sind, die in die Tragprofile (4) ein steckbar sind.

2. Aufzugskabine nach Anspruch 1,
**dadurch gekennzeichnet,**
**dass** jedes Tragprofil (4) einen Fuss (8) und zwei Schenkel (9,10) aufweist, wobei die Schenkel (9,10) Federeigenschaften aufweisen und die Paneelteile (12,13) festhalten.

3. Aufzugskabine nach einem der Ansprüche 1 bis 2,
**dadurch gekennzeichnet,**
**dass** die Paneelteile (12,13) an Paneelecken Rücksprünge (16) aufweisen und bei den Rücksprünge (16) ein erstes Paneelteil (12) stummelartig ausgebildet ist.

4. Aufzugskabine nach einem der vorhergehenden Ansprüche,
**dadurch gekennzeichnet,**
**dass** Kabinenausrünstung (18,19) in die Paneele (3) einbaubar ist.

5. Aufzug mit einer Aufzugskabine (AK) nach den Ansprüchen 1 bis 4.

6. Verfahren zum Aufbauen einer Kabinenwand (1) und/oder einer Kabinendecke (2) einer Aufzugskabine (AK) nach den Ansprüchen 1 bis 6, wobei Paneele (3) mit ersten Verbindungselementen (12,13) und Tragprofile (4) mit zweiten Verbindungselementen bereitgestellt werden und die Paneele (3) an den Tragprofilen (4) angebracht werden um mit den Paneelen (3) und mit den Tragprofilen (4) Kabinenwände (1) und/oder eine Kabinendecke (2) zu bilden, wobei die Paneele (3) von einem Innenraum (IR) der Aufzugskabine (AK) her durch Einstecken von Paneelteilen (12, 13) als ersten Verbindungsteilen in am Kabinentragrahmen (7) fixierten Tragprofilen (4) werkzeuglos angebracht werden.

## Claims

1. Elevator car (AK) with a car support frame (7), car walls (1) forming an interior space (IR) for passengers and/or goods, a car ceiling (2) and a car floor (BD), wherein the car walls (1) and/or the car ceiling (2) consists or consist of panels (3), which are fixable by means of connecting elements (4, 12, 13), and the panels (3) can be mounted from the interior space (IR) by means of first connecting elements (12, 13) and by means of second connecting elements (4), wherein the second connecting elements (4) are fixed to the car support frame (7) and are part of support sections (4) which together with the first connecting elements (12, 13) fix the panels (3), and wherein the first connecting elements (12, 13) are panel parts (12, 13) insertable into the support sections (4).

2. Elevator car according to claim 1, **characterised in that** each support section (4) has a foot (8) and two limbs (9, 10), wherein the limbs (9, 10) have resilient characteristics and fix the panel parts (12, 13).

3. Elevator car according to one of claims 1 and 2, **characterised in that** the panel parts (12, 13) have recessed regions (16) at panel corners and a first panel part (12) is formed to be fin-like at the recessed regions (16).

4. Elevator car according to any one of the preceding claims, **characterised in that** car equipment (18, 19) can be incorporated in the panels (3).

5. Elevator with an elevator car (AK) according to any one of claims 1 to 4.

6. Method of constructing a car wall (1) and/or a car ceiling (2) of an elevator car (AK) according to any one of claims 1 to 6, wherein panels (3) with first connecting elements (12, 13) and support sections (4) with second connecting elements are provided and the panels (3) are mounted on the support sections (4) in order to form, together with the panels (3) and the support sections (4), car walls (1) and/or a car ceiling (2), wherein the panels (3) can be mounted without tools from an interior space (IR) of the elevator car (AK) by inserting panel parts (12, 13) as first connecting parts in support sections (14) fixed to the car support frame (7).

## Revendications

1. Cabine d'ascenseur (AK) avec un cadre porteur de cabine (7) et des parois de cabine (1) qui forment un habitacle (IR) pour des passagers et/ou des produits, et un plafond de cabine (2) et un plancher de cabine (BD), étant précisé que les parois de cabine (1) et/ou le plafond de cabine (2) se composent de panneaux (3) qui sont aptes à être fixés à l'aide d'éléments de liaison (4, 12, 13), et que les panneaux (3) sont aptes à être installés de l'habitacle (IR) à l'aide de premiers éléments de liaison (12, 13) et de seconds éléments de liaison (4), étant précisé que les seconds éléments de liaison (4) sont fixés au cadre porteur de cabine (7) et font partie de profilés porteurs (4) qui, avec les premiers éléments de liaison (12, 13), fixent les panneaux (3), et étant précisé que les premiers éléments de liaison (12, 13) sont des parties de panneaux (12, 13) qui sont aptes à être introduites dans les profilés porteurs (4).

2. Cabine d'ascenseur selon la revendication 1, **caractérisée en ce que** chaque profilé porteur (4) présente une base (8) et deux branches (9, 10), étant précisé que les branches (9, 10) présentent des propriétés élastiques et fixent les parties de panneaux (12, 13).

3. Cabine d'ascenseur selon l'une des revendications 1 à 2, **caractérisée en ce que** les parties de panneaux (12, 13) présentent sur leurs coins des épaulements (16) et qu'au niveau de ces épaulements (16), une première partie de panneau (12) a une forme tronquée.

4. Cabine d'ascenseur selon l'une des revendications précédentes, **caractérisée en ce que** l'équipement de cabine (18, 19) est apte à être intégré dans les panneaux (3).

5. Ascenseur avec une cabine d'ascenseur (AK) selon les revendications 1 à 4.

6. Procédé pour monter une paroi de cabine (1) et/ou un plafond de cabine (2) d'une cabine d'ascenseur (AK) selon les revendications 1 à 4, étant précisé que des panneaux (3) avec des premiers éléments de liaison (12, 13), et des profilés porteurs (4) avec des seconds éléments de liaison sont préparés, et que les panneaux (3) sont installés sur les profilés porteurs (4), afin de former avec les panneaux (3) et les profilés porteurs (4) les parois de cabine (1) et/ou un plafond de cabine (2), étant précisé que les panneaux (3) sont installés d'un habitacle (IR) de la cabine d'ascenseur (AK) sans outil, grâce à l'introduction de parties de panneaux (12, 13), comme premiers éléments de liaison, dans les profilés porteurs (4) fixés au cadre porteur de cabine (7).
